# FASCICULE DE BREVET EUROPEEN

(11) **EP 2 309 236 B1**
(45) Date de publication et mention de la délivrance du brevet: **11.04.2018**
(21) Numéro de dépôt: 10186483.3
(22) Date de dépôt: 05.10.2010
(51) Int. Cl.: G01J 3/453, G01N 21/35

(54) **Téléscope concentrateur de champ destiné à des missions de sondage atmosphérique**
Teleskop mit Blickfeldkomprimierung für atmosphärische Beobachtung
Field concentrating telescope for atmopheric observation

(30) Priorité: 09.10.2009 FR 0904849
(43) Date de publication de la demande: 13.04.2011
(73) Titulaire: Thales, 92400 Courbevoie (FR)
(72) Inventeur: Degrelle, Cyril, 06210 Mandelieu (FR)
(74) Mandataire: Esselin, Sophie

(56) Documents cités:
- US-B1- 7 030 991
- PENG LIU; PEIGANG WANG; JIANWEN HUA; HUZHAN WANG: "Spectral resolution of space-borne Fourier transform spectrometer" SPIE PROCEEDINGS OF THE 3RD INTERNATIONAL SYMPOSIUM ON ADVANCED OPTICAL MANUFACTURING AND TESTING TECHNOLOGIES: OPTICAL TEST AND MEASUREMENT TECHNOLOGY AND EQUIPMENT, vol. 6723, 672346, 2007, pages 672346-1-672346-10, XP040246050

## Description

La présente invention concerne un système optique pour spectromètre à transformée de Fourier destiné à des missions de sondage atmosphérique. La fonction du dispositif décrit dans l'invention consiste à extraire du champ de vue total de l'instrument de sondage atmosphérique les informations utiles contenues dans les zones d'intérêt appelés points de sondage et à les ré-organiser pour réduire le champ de vue du spectromètre en aval de ce dispositif optique.

Les spectromètres à Transformée de Fourier (également désignés selon l'expression anglo-saxonne «FTS », pour «Fourier Transform Spectrometer ») sont communément utilisés en interférométrie, et connaissent notamment des applications en spectrométrie, comme par exemple la spectrométrie infrarouge.

Dans ce type d'instrument, des faisceaux lumineux distincts, issus de la séparation d'un faisceau lumineux incident, parcourent des chemins optiques différents dans des portions de l'interféromètre, également appelées « bras » de l'interféromètre, le plus souvent au nombre de deux.

La recombinaison des faisceaux distincts permet alors d'obtenir un interférogramme, mesuré par un détecteur, résultant de la différence de marche optique desdits faisceaux.

La différence de marche est généralement créée en déplaçant dans les bras de l'interféromètre un ou plusieurs dispositifs optiques mécaniquement mobiles.

Un critère fondamental pour examiner la performance d'un interféromètre est sa résolution spectrale, c'est-à-dire sa capacité à séparer sans ambiguïté deux éléments spectraux contigus.

La résolution spectrale est d'autant plus élevée que la différence de marche créée entre les bras de l'interféromètre est élevée. En particulier, la finesse spectrale est égale à l'inverse de la différence de marche créée entre les bras de l'interféromètre.

Néanmoins, l'augmentation de la différence de marche est soumise à certaines limitations dans les instruments de l'art antérieur.

Comme les faisceaux lumineux incidents présentent un angle de champ *θ* non nul par rapport à l'axe optique de l'interféromètre, résultant du champ angulaire de la scène observée - par exemple, une zone de la surface de la Terre - , lesdits faisceaux vont parcourir un chemin optique de longueur différente par rapport aux faisceaux lumineux incidents au niveau de l'axe optique, qui présentent, eux, un angle de champ *θ* nul.

La différence de marche réelle *δ* est alors une fonction de l'angle de champ *θ*. Dans un interféromètre de type Michelson, la différence de marche réelle *δ*, variable en fonction de l'angle de champ *θ*, s'écrit *δ* = *δ'*·cos *θ*, où *δ*' est la différence de marche créée par l'intermédiaire du dispositif optique mobile dans les bras de l'interféromètre, et *θ* est l'angle de champ.

En conséquence, chaque faisceau lumineux incident produit son propre interférogramme, différent d'un autre faisceau lumineux, ce qui brouille l'interférogramme mesuré par le détecteur et diminue son contraste. Plus la différence de marche *δ*' créée entre les bras de l'interféromètre par l'intermédiaire du dispositif optique mobile est grande, plus le contraste va diminuer, jusqu'à s'annuler dans certains cas.

Ce phénomène est connu de l'homme du métier sous le nom d'auto-apodisation.

La résolution spectrale est donc limitée par l'ouverture angulaire de l'instrument, c'est-à-dire son champ de vue.

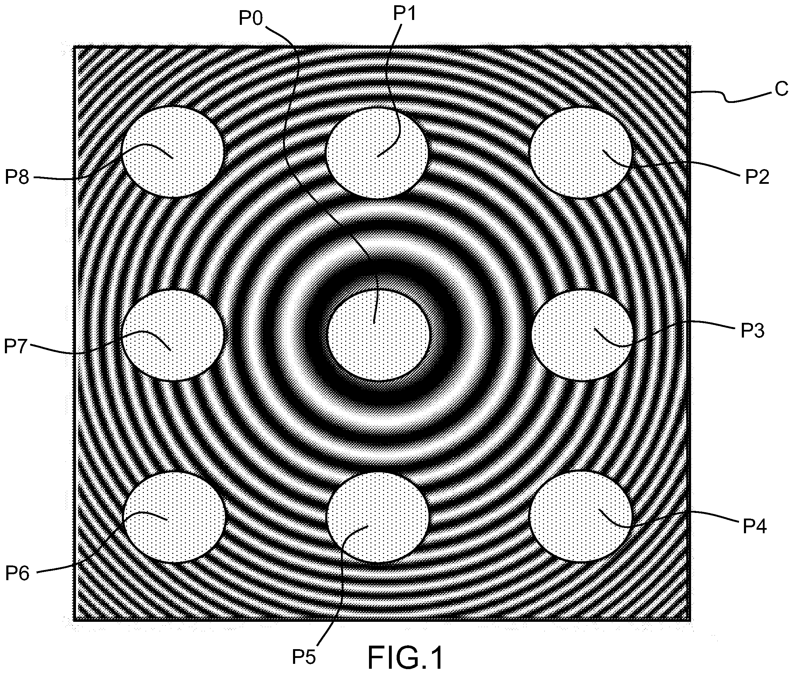

La problématique est donc double : il s'agit de concilier des objectifs élevés en termes de radiométrie et de résolution spectrale sans dépasser le maximum d'apodisation admissible sur chacun des points de sondage. Les points de sondage atmosphérique sont définis comme des zones de la surface de la Terre projetées dans le champ de l'instrument. Dans les applications de sondage de l'atmosphère, les analyses spectrales sont faites sur des colonnes atmosphériques de section carrée ou circulaire dont la projection au sol correspond à des carrés pleins ou des disques pleins de dimension (côté du carré ou diamètre du disque) avoisinant les 10 km. Un exemple d'arrangement de points de sondage circulaires est montré sur la figure 1. Les points de sondage sont imagés dans l'espace de l'interféromètre par un dispositif optique, tel qu'un télescope, apte à diriger l'ensemble de faisceaux lumineux continus correspondant à des points de sondage atmosphérique vers l'interféromètre. La projection des points de sondage atmosphérique par rapport à l'axe optique de l'interféromètre définit le champ de vue utile.

La présente invention participe à satisfaire ces objectifs techniques antagonistes : augmenter conjointement le champ de l'instrument et la différence de marche créée entre les bras de l'interféromètre sans sacrifier les performances de contraste au sein de chaque point de sondage.

Les technologies actuelles développées dans ce but sont insuffisantes. L'une d'entre elles consiste à discrétiser les points de sondage. Chaque point de sondage est alors associé à une matrice de pixels sur-échantillonnée ; puis un traitement numérique spécifique est appliqué afin de corriger les phases.

L'inconvénient majeur de cette technologie réside dans la trop grande quantité d'informations à redescendre au sol : le taux de compression requis, typiquement de l'ordre de 300, s'avère trop élevé.

Enfin, la demande de brevet WO 03/067305 décrit un instrument permettant la recombinaison de faisceaux multi-télescope mais celui-ci, en ce qu'il nécessite la présence de plusieurs télescopes, est très pénalisant en termes de masse et d'encombrement.

Les technologies connues ont atteint leurs limites en termes de performance. Pour améliorer significativement le couple radiométrie - résolution spectrale, tout en conservant un niveau de contraste admissible, la présente invention propose une solution novatrice consistant, à partir de points de sondage pouvant être pris sur un grand champ, à l'aide d'une surface collectrice de grande taille, à rapprocher lesdits points de sondage de l'axe optique du système, par l'intermédiaire d'un dispositif optique tel qu'un périscope.

Des technologies existantes permettent de concentrer le champ de vue au niveau de l'interféromètre en changeant le grandissement latéral du télescope en entrée de l'interféromètre dans une ou plusieurs directions spécifiques, comme dans le brevet US 7030991. Toute l'information contenue dans la scène en entrée de l'instrument est conservée en entrée de l'interféromètre. La compression de champ dans cette technologie s'accompagne inévitablement d'une augmentation de la taille des composants optiques soit dans l'interféromètre dans la ou les directions de compression de champ, soit à l'entrée de l'instrument (en amont dudit télescope) dans la direction orthogonale à la compression de champ, pour conserver une performance radiométrique identique.

La présente invention consiste à extraire dans le champ de vue total de l'instrument les informations contenues dans les zones utiles, correspondant à des points de sondage, sans transformation physique de l'image, puis à ré-organiser les images des points de sondage non déformées dans le champ de vue de l'interféromètre. L'invention tire profit du fait que les points de sondage à observer sont disjoints : elle consiste à extraire les images des points de sondages dans le champ total de l'instrument sans changer leur taille et à les rapprocher les unes des autres dans le champ de vue de l'interféromètre en aval. Les images n'ayant subi aucune transformation, en particulier aucune modification du grandissement latéral, les composants optiques dans l'interféromètre ou en amont du télescope ne devront aucunement être surdimensionnés.

A cet effet, l'invention a pour objet un système optique selon la revendication 1. Le système présentant un axe optique dont la projection dans ledit champ de l'interféromètre correspond audit centre du champ de l'interféromètre, ledit dispositif optique peut avantageusement rapprocher lesdits faisceaux lumineux dudit axe optique, en amont de l'interféromètre.

Selon un mode de mise en oeuvre de l'invention, ledit dispositif optique apte à rapprocher lesdites projections des points de sondage du centre du champ de l'interféromètre est un périscope.

Avantageusement, ledit système comprenant par ailleurs des éléments aptes à générer une image-Terre, c'est-à-dire une image intermédiaire de la Terre, nette dans un plan image-Terre, ledit dispositif optique apte à rapprocher lesdites projections des points de sondage du centre du champ de l'interféromètre peut être placé dans ledit plan image-Terre.

Avantageusement, le système selon l'invention peut comprendre un ensemble de dispositifs optiques aptes à rapprocher lesdites projections des points de sondage du centre du champ de l'interféromètre, disposés en cascade.

Avantageusement, ledit dispositif optique apte à rapprocher lesdites projections des points de sondage du centre du champ de l'interféromètre peut comprendre un miroir double face permettant la mise en oeuvre dudit dispositif optique en cascade.

Selon une mise en oeuvre possible de l'invention, lesdits points de sondage correspondant à des projections desdits points de sondage sur ledit champ sont au moins au nombre de neuf.

D'autres caractéristiques et avantages de l'invention apparaîtront à l'aide de la description qui suit, faite en regard des dessins annexés qui représentent :
- la figure 1 : le schéma du principe général d'un système optique doté d'un interféromètre et destiné à des missions aux objectifs élevés décrits ci-avant de sondage atmosphérique, selon l'état de la technique ;
- la figure 2 : le schéma d'une technologie connue visant à améliorer la résolution de mesures de sondage atmosphérique ;
- la figure 3a : le schéma du principe de la présente invention ;
- la figure 3b : un autre schéma, simplifié, indiquant l'effet technique obtenu grâce à l'invention ;
- la figure 4 : le schéma d'un exemple de dispositif optique permettant la mise en oeuvre de l'invention.

La figure 1 présente un schéma sur lequel on visualise la projection de points de sondage sur le champ d'un interféromètre, qui correspond à une figure d'interférences montrée pour une différence de marche entre les bras de l'interféromètre élevée. Dans le contexte d'un système optique embarqué sur un satellite, des éléments optiques, soit un ou plusieurs télescopes, acquièrent des faisceaux lumineux dans le but d'effectuer des points de sondage dans l'atmosphère. Ces faisceaux lumineux sont acheminés par le télescope vers ledit interféromètre dont le fonctionnement a été brièvement rappelé précédemment.

Les projections P0 à P8 des points de sondage sur le champ C de l'interféromètre permettent de mesurer, en fonction de leurs spectres d'absorption, différents paramètres tels que la concentration de l'atmosphère en certains gaz en fonction de l'altitude par exemple. Il faut noter que lesdites projections P0 à P8 des points de sondage sur le champ C peuvent, et cela est vrai pour l'ensemble des figures et des modes de réalisation décrits, être en quantité quelconque, et être disposées selon des schémas quelconques, différents de ceux représentés dans les présentes figures.

L'objectif poursuivi lors du développement de tels systèmes optiques est de concilier les contraintes radiométriques et de résolution spectrale afin de fournir les mesures les plus précises possibles, tout en conservant un niveau de contraste admissible. Les premières contraintes induisent une augmentation du nombre de franges par point de sondage mais la contrainte visant à conserver un contraste satisfaisant impose un maximum admissible pour le nombre de frange par pixel, l'image de chaque projection d'un point de sondage correspondant à un ensemble de pixels. Cette contrainte, appelée apodisation maximum admissible, est typiquement de l'ordre de 1,1 frange par pixel.

L'objet de la présente invention est de favoriser la conciliation de ces objectifs antagonistes.

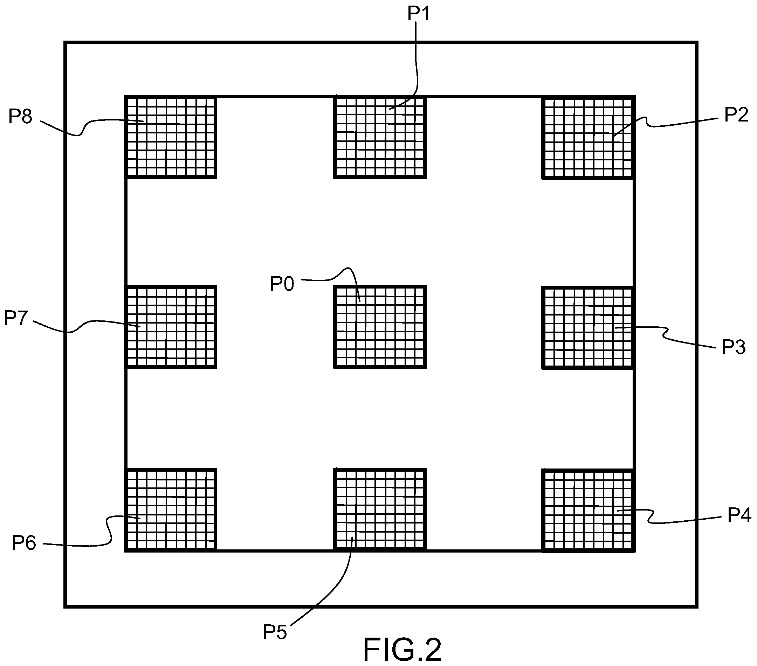

La figure 2 illustre un exemple de technologie connue développée dans ce but, mais aux performances insuffisantes. Cette solution implique un traitement numérique des images des points de sondage. Les projections P0 à P8 des points de sondage sur le champ C de l'interféromètre sont discrétisés et associés à des matrices de pixels, chaque point de sondage P0 à P8 étant sur-échantillonné. Un traitement numérique spécifique est ensuite appliqué, éventuellement à chaque pixel, puis ceux-ci sont sommés. Le principal défaut de cette technologie réside dans la quantité d'informations très importante censée être redescendue au sol. Cette quantité d'informations est trop élevée pour le débit des liens descendants actuels ou impliquerait un taux de compréhension difficile à atteindre à ce jour.

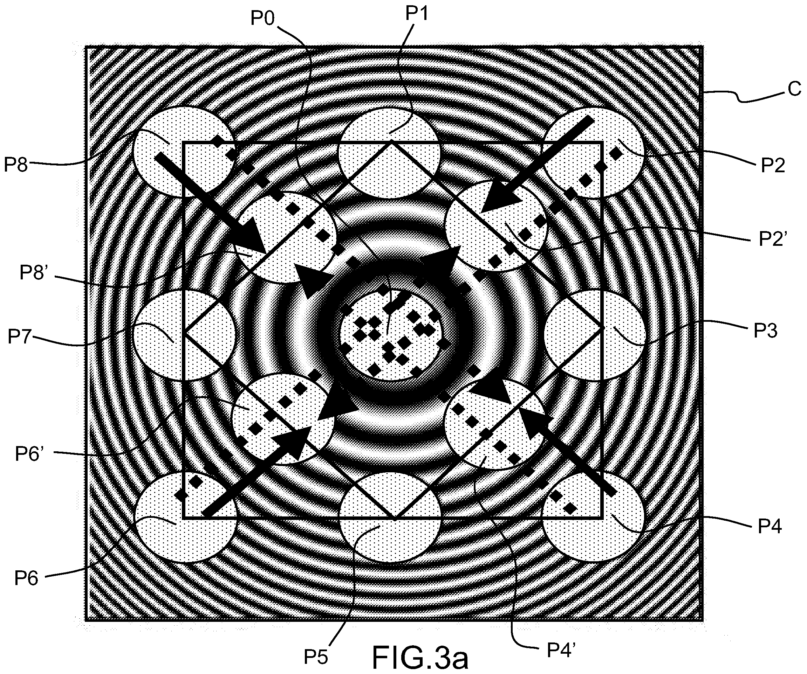

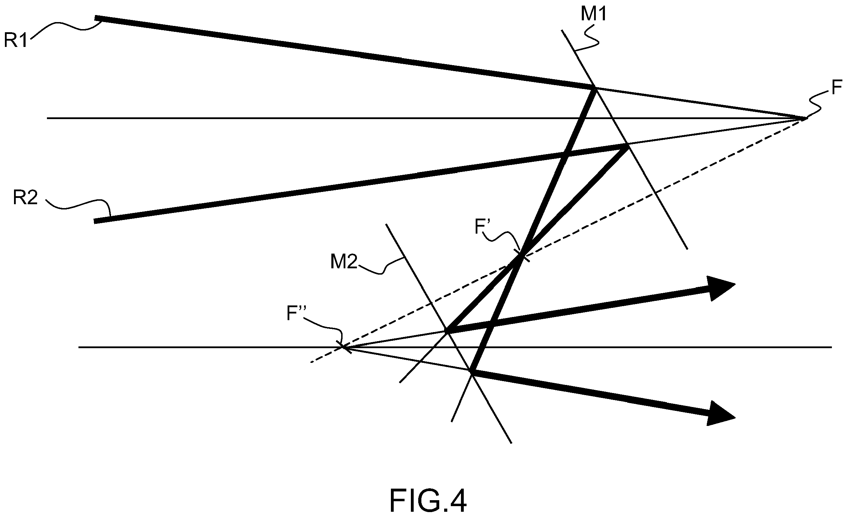

La figure 3a représente un effet technique obtenu par l'intermédiaire de l'invention. Le principe est de rapprocher les projections des points de sondage P0 à P8 du centre du champ de l'interféromètre C par l'intermédiaire d'un dispositif optique adapté. Selon l'invenion ce dispositif optique est un périscope, tel que présenté à la figure 4, placé en amont de l'interféromètre. Néanmoins, tout dispositif optique adapté, notamment réalisé à l'aide de lentilles et de miroirs, peut être utilisé en alternative. Les faisceaux lumineux acquis par le télescope, comme cela a déjà été décrit, sont répartis autour d'un axe optique du système dont l'image dans le champ de l'interféromètre en est le centre. Le dispositif optique placé en amont de l'interféromètre rapproche de l'axe optique les faisceaux lumineux correspondant aux points de sondage, ou une partie desdits faisceaux lumineux. Ainsi, par exemple, les projections desdits points de sondage P2, P4, P6, P8 sur le champ C de l'interféromètre correspondent respectivement aux points P2', P4', P6', P8' sur la figure 3a. On parle alors de concentration de champ.

Comme le montre la figure 3a, le dispositif optique choisi pour mettre en oeuvre l'invention peut également amener les projections des points de sondage P2, P4, P6, P8 à correspondre respectivement aux points P6', P8', P2', P4'.

Grâce à cette technique, la capacité d'étendue de l'interféromètre utilisé est augmentée.

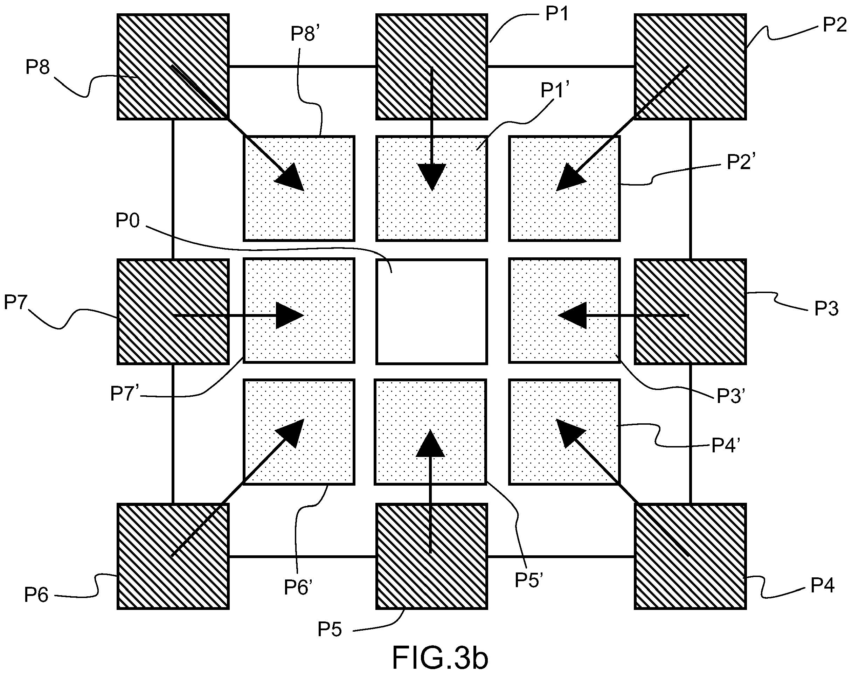

Dans l'exemple de la figure 3b, l'ensemble des faisceaux est rapproché de l'axe optique par un dispositif adapté, tel qu'un périscope, selon le principe décrit à la figure 4. Ainsi, les projections des points de sondage sur le champ de l'interféromètre du système correspondent aux points P0, P1' à P8' sur la figure 3b, et non aux points P0 à P8 comme en l'absence du dispositif optique adapté selon l'invention.

La figure 4 présente un exemple de dispositif optique permettant la mise en oeuvre de l'invention. Ce dispositif est un périscope constitué des miroirs M1 et M2. Dans le cadre d'une mise en oeuvre de l'invention, ledit périscope peut être placé à proximité d'une image Terre nette réalisée par une optique présente dans le satellite.

Dans un mode de réalisation de l'invention, le dispositif est constitué de deux miroirs réfléchissants M1 et M2 disposés près d'une image Terre. Les faisceaux incidents R1 et R2 définissent l'ouverture d'un point de sondage et concourent en F qui est l'image du point de la Terre au centre dudit point de sondage. R1 et R2 se réfléchissent successivement sur M1 puis M2. Après réflexion sur M2, les faisceaux R1 et R2 semblent provenir d'un point image de la Terre F" qui est décalé latéralement par rapport au point image d'origine F. Le dispositif permet ainsi, conformément à l'invention, d'amener les projections des points de sondage en l'absence de dispositif à correspondre à des points de sondage plus proche du centre du champ de l'interféromètre.

Dans un mode de réalisation de l'invention, le dispositif est constitué d'un couple de miroirs M1 et M2 tels que décrits ci-dessus, pour chaque point de sondage à déplacer.

Ce dispositif peut par ailleurs être disposé et fonctionner en cascade, en particulier à l'aide d'un miroir double face.

Les avantages qui découlent de ce principe sont nombreux :
- augmentation de la capacité d'étendue des interféromètres alors que l'étendue géométrique de chaque point de sondage est inchangé ;
- réduction de la taille des optiques en aval du dispositif optique adapté pour concentrer les faisceaux lumineux correspondant aux points de sondage autour de l'axe optique ;
- réduction du débit de données à redescendre.

## Revendications

1. Système optique destiné à être utilisé dans le cadre de missions de sondage atmosphérique et comportant un télescope et un interféromètre,
- ledit télescope étant apte à diriger un ensemble de faisceaux lumineux (R1, R2) vers ledit interféromètre, ledit ensemble de faisceaux lumineux provenant de points de sondage atmosphérique correspondant à des colonnes atmosphériques, lesdits points de sondage étant disjoints,-ledit interféromètre présentant un champ de vue (C) et le système optique comprenant un axe optique dont la projection dans ledit champ de vue (C) correspond au centre dudit champ de vue (C), et chaque point de sondage présentant une projection (P0 à P8) sur ledit champ (C),
**caractérisé en ce que** ledit système optique comprend en outre un dispositif optique disposé entre le télescope et l'interféromètre, et comprenant un périscope comprenant un couple de miroirs (M1, M2) configurés pour rapprocher (P1' à P8') lesdites projections des points de sondage (P0 à P8) du centre du champ (C) de l'interféromètre, lesdites projections décalées latéralement n'ayant subi aucune modification du grandissement latéral.

2. Système selon la revendication 1, **caractérisé en ce que** ledit dispositif optique apte à rapprocher lesdites projections des points de sondage (P0 à P8) du centre (C) du champ de l'interféromètre comprend t un périscope pour chaque point de sondage à déplacer.

3. Système selon l'une quelconque des revendications précédentes, ledit système comprenant par ailleurs des éléments aptes à générer une image-Terre, c'est-à-dire une image intermédiaire de la Terre, nette dans un plan image-Terre, **caractérisé en ce que** ledit dispositif optique apte à rapprocher (P1' à P8') lesdites projections des points de sondage (P0 à P8) du centre du champ (C) de l'interféromètre est placé à proximité dudit plan image-Terre.

4. Système selon l'une quelconque des revendications 2 ou 3 précédentes, **caractérisé en ce que** lesdits périscopes aptes à rapprocher (P0' à P8') lesdites projections des points de sondage (P0 à P8) du centre du champ (C) de l'interféromètre, sont disposés en cascade.

5. Système selon la revendication 4, **caractérisé en ce que** ledit dispositif optique apte à rapprocher (P1' à P8') lesdites projections des points de sondage (P0 à P8) du centre du champ (C) de l'interféromètre comprend au moins un miroir double face permettant la mise en oeuvre en cascade desdits périscopes.

6. Système selon l'une quelconque des revendications précédentes, dans lequel lesdits points de sondage correspondant à des projections desdits points de sondage sur ledit champ (C) sont au moins au nombre de neuf.

## Patentansprüche

1. Optiksystem, bestimmt zum Gebrauch im Rahmen von atmosphärischen Beobachtungen, beinhaltend ein Teleskop und ein Interferometer,
- wobei das Teleskop fähig ist, eine Gruppe von Lichtstrahlen (R1, R2) auf das Interferometer zu richten, wobei die Gruppe von Lichtstrahlen von atmosphärischen Beobachtungspunkten stammt, welche atmosphärischen Säulen entsprechen, wobei die Beobachtungspunkte voneinander getrennt sind- wobei das Interferometer ein Blickfeld (C) aufweist und das Optiksystem eine optische Achse beinhaltet, deren Projektion in das Blickfeld (C) dem Mittelpunkt des Blickfeldes (C) entspricht, und jeder Beobachtungspunkt eine Projektion (P0 bis P8) im Feld (C) aufweist,
**dadurch gekennzeichnet, dass** das Optiksystem zudem eine optische Vorrichtung besitzt, angeordnet zwischen dem Teleskop und dem Interferometer, und ein Periskop beinhaltet, welches ein Paar von Spiegeln (M1, M2) beinhaltet, konfiguriert, um die Projektionen (P1' bis P8') der Beobachtungspunkte (P0 bis P8) dem Mittelpunkt des Feldes (C) des Interferometers zu nähern, wobei den seitlich verschobenen Projektionen keine Veränderung der seitlichen Vergrößerung widerfahren ist.

2. System nach Anspruch 1, **dadurch gekennzeichnet, dass** die optische Vorrichtung, welche fähig ist, die Projektionen der Beobachtungspunkte (P0 bis P8) dem Mittelpunkt (C) des Feldes des Interferometers zu nähern, ein Periskop t für jeden zu verschiebenden Beobachtungspunkt beinhaltet.

3. System nach einem der vorhergehenden Ansprüche, wobei das System zudem Elemente beinhaltet, die fähig sind, eine Bild-Erde zu erzeugen, d. h. ein Zwischenbild der Erde, welches in einer Bild-Erde-Ebene scharf ist, **dadurch gekennzeichnet, dass** die optische Vorrichtung, welche fähig ist, die Projektionen (P1' bis P8') der Beobachtungspunkte (P0 bis P8) dem Mittelpunkt des Feldes (C) des Interferometers zu nähern, in der Nähe der Bild-Erde-Ebene platziert ist.

4. System nach einem der vorhergehenden Ansprüche 2 oder 3, **dadurch gekennzeichnet, dass** die Periskope, welche fähig sind, die Projektionen (P0' bis P8') der Beobachtungspunkte (P0 bis P8) dem Mittelpunkt des Feldes (C) des Interferometers zu nähern, in Kaskade angeordnet sind.

5. System nach Anspruch 4, **dadurch gekennzeichnet, dass** die optische Vorrichtung, welche fähig ist, die Projektionen (P1' bis P8') der Beobachtungspunkte (P0 bis P8) dem Mittelpunkt des Feldes (C) des Interferometers zu nähern, mindestens einen doppelseitigen Spiegel beinhaltet, welcher die Umsetzung der Periskope in Kaskade ermöglicht.

6. System nach einem der vorhergehenden Ansprüche, bei welchem die Anzahl der Beobachtungspunkte, welche den Projektionen der Beobachtungspunkte auf dem Feld (C) entsprechen, mindestens neun beträgt.

## Claims

1. An optical system intended to be used within the scope of atmospheric sounding missions and comprising a telescope and an interferometer,
- said telescope being capable of directing a set of light beams (R1, R2) towards said interferometer, said set of light beams originating from atmospheric sounding points corresponding to atmospheric columns, said sounding points being disjoined;
- said interferometer having a field of view (C) and the optical system comprising an optical axis, the projection of which in said field of view (C) corresponds to the centre of said field of view (C), and each sounding point having a projection (P0 to P8) on said field (C),
**characterised in that** said optical system further comprises an optical device disposed between the telescope and the interferometer and comprising a periscope comprising a pair of mirrors (M1, M2) configured to move said projections (P1' to P8') of said sounding points (P0 to P8) closer to the centre of the field (C) of the interferometer, said laterally offset projections not having experienced any modification to the lateral magnification.

2. The system as claimed in claim 1, **characterised in that** said optical device capable of moving said projections of the sounding points (P0 to P8) closer to the centre of the field (C) of the interferometer comprises a periscope for each sounding point to be moved.

3. The system as claimed in any one of the preceding claims, said system further comprising elements capable of generating a clear earth image, i.e. an intermediate image of the earth, in an earth image plane, **characterised in that** said optical device capable of moving said projections (P1' to P8') of the sounding points (P0 to P8) closer to the centre of the field (C) of the interferometer is placed in the vicinity of said earth image plane.

4. The system as claimed in claim 2 or 3, **characterised in that** said periscopes capable of moving said projections (P1' to P8') of the sounding points (P0 to P8) closer to the centre of the field (C) of the interferometer are disposed in a cascade like manner.

5. The system as claimed in claim 4, **characterised in that** said optical device capable of moving said projections (P1' to P8') of the sounding points (P0 to P8) closer to the centre of the field (C) of the interferometer comprises at least one double-sided mirror allowing said periscopes to be implemented in a cascade like manner.

6. The system as claimed in any one of the preceding claims, wherein there are at least nine of said sounding points corresponding to projections of said sounding points on said field (C).
